# EUROPÄISCHE PATENTSCHRIFT

(11) **EP 3 668 662 B1**
(45) Veröffentlichungstag und Bekanntmachung des Hinweises auf die Patenterteilung: **03.08.2022**
(21) Anmeldenummer: 18756202.0
(22) Anmeldetag: 15.08.2018
(51) Int. Cl.: B21B 35/00

(54) **DIREKTANTRIEB BEI ROLLEN, WALZEN UND WINDEN IN DER STAHL/NICHTEISEN-INDUSTRIE**
DIRECT DRIVE FOR ROLLERS, ROLLS AND WINCHES IN THE STEEL/NONFERROUS INDUSTRY
ENTRAÎNEMENT DIRECT POUR ROULEAUX, CYLINDRES ET TREUILS DANS L'INDUSTRIE DE L'ACIER/DES MÉTAUX NON FERREUX

(30) Priorität: 18.08.2017 DE 102017214412
(43) Veröffentlichungstag der Anmeldung: 24.06.2020
(73) Patentinhaber: SMS Group GmbH, 40237 Düsseldorf (DE)
(72) Erfinder: DE KOCK, Peter, 46117 Oberhausen (DE); TIMMERBEUL, Walter, 42281 Wuppertal (DE); PLATE, Frank, 40589 Düsseldorf (DE)
(74) Vertreter: Kross, Ulrich
(86) Internationale Anmeldenummer: PCT/EP2018/072091
(87) Internationale Veröffentlichungsnummer: WO 2019/034677

(56) Entgegenhaltungen:
- EP-A1- 2 258 491
- WO-A1-03/080927
- WO-A1-2005/056195
- DE-B3-102008 011 589
- DE-C- 620 242

## Beschreibung

### Technisches Gebiet

Die Erfindung betrifft eine Vorrichtung zur Behandlung eines bandförmigen Metallmaterials in der Metallbearbeitung, wobei die Vorrichtung einen Antrieb und mindestens ein Rollenelement, vorzugsweise Rolle, Walze und/oder Winde, zur Querschnittsänderung, zum Transport, Speichern, Zugaufbau und/oder Zugabbau des Metallmaterials aufweist.

### Hintergrund der Erfindung

Bei der Metallbearbeitung wird eine Vielzahl von Arbeitsmaschinen mit angetriebenen zylinderförmigen oder auch kegelförmigen rotierenden Rollen, Walzen und/oder Winden eingesetzt, um den Materialtransport, Zugaufbau und Zugabbau, eine Speicherung zu realisieren oder das Material umzuformen. Sie werden beispielsweise in Walz- und Prägewerken eingesetzt, um Stahl oder Nichteisenmetalle umzuformen, sowie in Metallbandbehandlungsanlagen als Spann- und Transportrollen.

Der Antrieb der Rollen, Walzen und Winden erfolgt über einen Antriebsstrang, der neben einem Drehstrommotor zur Erzeugung des Drehmoments weitere mechanische Komponenten zur Übertragung und Änderung des Drehmoments aufweist, wie etwa Kupplungen, Getriebe, Bremsen usw.. Dabei liegt eine technologische Trennung zwischen dem anzutreibenden Maschinenteil und dem elektrischen Antrieb vor. Diese Trennung führt dazu, dass die Schnittstelle zwischen dem anzutreibenden Maschinenteil und dem Antrieb nicht optimal ist.

Genauer gesagt ist die Rolle, Walze oder Wind über Lager an den beiden Enden mit einem Gestell drehbar verbunden. Die Übertragung des Drehmoments vom Antrieb auf die Rolle, Walze oder Winde erfolgt nun gegenwärtig über eine oder mehrere Kupplungen, eine Antriebsspindel, die etwa als Kardanwelle ausgeführt sein kann, ein Untersetzungsgetriebe mit Zahnrädern, Lager, Bremsmittel und andere bewegliche mechanische Teile. Bei der Regelung einer solchen Maschine tritt das Problem auf, dass sowohl die Kupplung als auch der Übergang vom Getriebe zur Kupplung und von der Kupplung zum Rotor des Antriebs gegen Torsionsbelastungen nicht in dem gewünschten Maß drehmomentsteif sind. Durch die Torsionsnachgiebigkeit können die Drehzahl und der Drehwinkel der Rolle, Walze oder Winde gegen den Antrieb schwingen, was zu Problemen bei der Regelgenauigkeit führen kann. Dieses Problem, d.h. die genaue und zuverlässige Übertragung des Drehmoments eines drehzahl- oder lagegeregelten Elektromotors auf das anzutreibende Maschinenteil, tritt in besonderem Maße beim Antrieb von Rollen mit einem großen Trägheitsmoment, etwa Stützrollen in einem Walzwerk, auf.

Die oben dargelegte Antriebskonstruktion nimmt ferner viel Raum ein und muss unterhalb der Rolle, Walze oder Winde im Fundament montiert werden, um die Wartung und einen Wechsel der Rolle, Walze oder Winde auf praktikable Weise zu ermöglichen. Dies führt zu hohen Kosten sowie zu Leistungsverlusten im Antriebsstrang. Viele bewegliche Teile müssen durch Schutzeinrichtungen geschützt werden, sie führen außerdem zu einem hohen Wartungsaufwand und verringern die Zuverlässigkeit. Es ist zudem schwierig und teuer, den herkömmlichen Antriebsstrang für eine hohe Überlast auszulegen.

Die WO 03/080927 A1, welche die Basis für den Oberbegriff des Anspruchs 1 bildet, beschreibt eine Vorrichtung zum Abstützen einer Welle einer Papiermaschine. Die WO 2005/056195 A1 beschreibt einen Außenläuferantrieb. Die EP 2 258 491 A1 beschreibt ein Rotationswerkzeug für eine Walzstraße. Die DE 620 242 C beschreibt ein Walzwerk mit mehreren hintereinander oder senkrecht übereinander angeordneten Walzensätzen. Die DE 10 2008 011 589 B3 beschreibt ein Elektrohandwerkzeug mit Magneten zum Absorbieren von Staub.

### Darstellung der Erfindung

Eine Aufgabe der Erfindung besteht darin, eine Vorrichtung zur Querschnittsänderung, zum Transport, Speichern, Zugaufbau und/oder Zugabbau eines bandförmigen Metallmaterials anzugeben, die wenigstens einen der oben genannten technischen Nachteile überwindet. Insbesondere soll die Vorrichtung bei kompakter Bauart und geringen Kosten eine hohe Zuverlässigkeit und Regelungsgenauigkeit aufweisen.

Gelöst wird die Aufgabe mit einer Vorrichtung mit den Merkmalen des Anspruchs 1. Vorteilhafte Weiterbildungen folgen aus den Unteransprüchen, der folgenden Darstellung der Erfindung sowie der Beschreibung bevorzugter Ausführungsbeispiele.

Die Vorrichtung dient zur Behandlung eines bandförmigen Metallmaterials in der Metallbearbeitung, insbesondere zur Querschnittsänderung, zum Transport, Speichern bzw. Puffern, Zugaufbau und/oder Zugabbau von Metallbändern aus Stahl oder Nichteisenmetallen, den sogenannten NE-Metallen.

Die erfindungsgemäße Vorrichtung weist mindestens ein Rollenelement auf. Die Bezeichnung "Rollenelement" umfasst hierbei jedweden zylindrischen - nicht nur kreiszylindrischen - drehbar gelagerten Körper, der zur Querschnittsänderung, zum Transport, zur Beschleunigung, zum Zugaufbau und/oder Zugabbau von Metallbändern ausgelegt ist. Die Vorrichtung weist ferner ein Gestell auf. Das Gestell kann offen oder geschlossen sein, insbesondere fallen Gehäuse, Grundrahmen und dergleichen unter die Bezeichnung "Gestell". Gemäß einer bevorzugten Ausführungsform weist das Gestell ein oder mehrere Lager zur drehbaren Lagerung des Rollenelements oder einer Welle, die mit dem Rollenelement verbunden ist, auf. Das Rollenelement ist vorzugsweise eine Rolle, Walze oder Winde. Im Falle der Winde kommt das Rollenelement somit nicht direkt mit dem Bandmaterial in Kontakt, sondern dient als Seilwinde vorzugsweise für einen horizontalen oder vertikalen Bandspeicher. Ein solcher Bandspeicher wird in Bandbehandlungsanlagen, insbesondere Walzwerken, eingesetzt, um die Bearbeitungsmaschinen kontinuierlich mit Bandmaterial zu versorgen. Anlagenbereiche unterschiedlicher Bearbeitungsgeschwindigkeit oder ein diskontinuierlicher Anlagenbereich und ein stabiler Bandlauf können mittels des Bandspeichers miteinander verbunden werden, indem das Bandmaterial vom Bandspeicher gespeichert bzw. gepuffert wird.

Ferner weist die Vorrichtung erfindungsgemäß mindestens einen Antrieb auf, der einen Elektromotor mit einem Stator und einem Rotor hat. Der Elektromotor kann als Kompaktmotor mit eigenen Lagern oder lagerlos ausgeführt sein. Der Elektromotor kann ein permanent erregter Drehstrommotor sein, er hat vorzugsweise ein Motorgehäuse oder Motorgestell, in dem der Rotor gelagert ist, der beispielsweise auf herkömmliche Weise durch die Kraft, die von einem Magnetfeld auf stromdurchflossene Leiter einer Spule ausgeübt wird, in Drehung versetzt wird. Alternativ kann das Gestell der Vorrichtung oder ein Teil davon als Motorgehäuse mitgenutzt werden. Vorzugsweise ist der Elektromotor ein Torquemotor oder Synchronmotor. Derartige Motoren können sehr hohe Drehmomente bei relativ kleinen Drehzahlen erzeugen, wodurch sie als Motoren für Direktantriebe besonders geeignet sind. Beispielsweise kann bei Verwendung eines Torquemotors in vielen Fällen auf ein Untersetzungsgetriebe verzichtet werden. Der Rotor ist mit dem Rollenelement verbunden, wodurch die Drehung des Rotors auf das Rollenelement übertragen wird. Der Stator ist direkt am Gestell der Vorrichtung montiert und/oder der Rotor ist direkt mit dem Rollenelement oder der oben genannten Welle des Rollenelements verbunden. Wenn der Stator des Antriebs direkt mit dem Gestell verbunden ist, sind das Gestell der Maschine und der Antrieb auf diese Weise miteinander "verblockt". Ein etwaiges Antriebsgehäuse oder Motorgehäuse, Antriebsgestell oder Motorgestell wird hierbei als Teil des Stators angesehen. Bei einer "direkten Verbindung", "direkten Befestigung" oder "direkten Montage" im Sinne der vorliegenden Anmeldung stehen die betreffenden mechanischen Komponenten unmittelbar miteinander in Kontakt, vorzugsweise auf eine starre Weise. Dies kann beispielsweise durch Verschrauben, Vernieten oder Verschweißen erreicht werden, aber auch eine einstückige Ausbildung ist umfasst.

Gemäß dem obigen Aufbau fungiert der Antrieb als Direktantrieb zum rotarischen Betrieb des Rollenelements. Durch die besondere Integration wird einerseits eine ausgesprochen hohe Drehsteifigkeit zwischen dem Elektromotor und dem Rollenelement erzielt, auf der anderen Seite können aufwendige mechanische Komponenten, wie etwa Getriebe, Kupplungen, Kardanwellen usw., im Antriebsstrang entfallen.

Damit wird der Antriebsstrang vereinfacht, er ist kompakt, wartungsarm, leicht und zuverlässig. Die Vorrichtung erzielt bei geringen Kosten eine Verbesserung der regelungstechnischen Eigenschaften des Rollenelements, aufgrund der hohen Drehsteifigkeit. Dies führt neben der Gewichtsreduzierung auch zu einer Verbesserung des energetischen Wirkungsgrads. Die Fundamente und Hallen zur Aufnahme der Maschine können verkleinert werden. Ferner erlaubt das dargestellte Antriebssystem eine einfache Erhöhung der Antriebsleistung, beispielsweise bei einem Umbau oder einer Modernisierung der Anlage, wenn etwa neue Materialien verarbeitet werden sollen, ohne dass der bestehende Antrieb ausgetauscht werden muss. Durch die Verringerung der Anzahl der Komponenten wird die Wartungsarbeit an der Vorrichtung vermindert, wodurch die Produktionszeit der Anlage verlängert werden kann. Ferner geht damit eine Reduzierung von sicherheitstechnischen Aufwendungen einher. Insgesamt werden die Freiheitsgrade der Maschine in Bezug auf Funktion und Design erhöht. Die Reduktion im Antriebsstrang ist günstig im Hinblick auf eine etwaige Standardisierung bzw. Normierung solcher Antriebssysteme. Durch die besondere Nähe des Antriebs zum Rollenelement kann das Gestell ferner als Kühlkörper oder Kühloberfläche des Elektromotors genutzt werden. Eine etwaige Durchführung für Medien, beispielsweise Hydrauliköl und/oder Kühlwasser, ist auch von der Antriebsseite des Rollenelements möglich. Bei herkömmlichen Band- oder Walzanlagen können durch den "drehweichen" Antrieb sogenannte Rattermarken oder Schattierungen auf dem Bearbeitungsmaterial entstehen. Diese werden durch Antriebsschwingungen im klassischen, komplexen Antriebsstrang erzeugt. Das Problem kann durch den Direktantrieb gemäß der Erfindung vermindert oder gelöst werden.

Ferner weist der Antrieb gemäß der Erfindung mindestens einen Fangmagneten auf, der beispielsweise ringförmig um eine Rotorverlängerung angeordnet sein kann. Der Fangmagnet ist eingerichtet, um magnetische Partikel aufzufangen und sie vom Elektromotor fernzuhalten. Dadurch kann trotz des integralen Aufbaus des Antriebs verhindert werden, dass magnetische Partikel in den Elektromotor geraten, wodurch die Zuverlässigkeit des Antriebs verbessert wird.

Vorzugsweise ist der Elektromotor als Innenläufer ausgebildet, wobei der Rotor direkt mit dem Rollenelement oder direkt mit einer Welle des Rollenelements verbunden ist. Dies schließt gemäß einer besonders bevorzugten Ausführungsform eine einstückige Ausgestaltung des Rotors und der Welle oder des Rotors und des Rollenelements ein. Dadurch lässt sich die Drehsteifigkeit zwischen dem Antrieb und dem Rollenelement weiter verbessern.

Alternativ kann der Elektromotor des Antriebs als Außenläufer konzipiert sein, wobei hierbei ein Mantelabschnitt des Rollenelements mit dem Rotor verbunden ist. Unter einem "Mantelabschnitt" wird nicht nur der äußerste Umfang des zylindrischen Rollenelements verstanden, sondern auch weiter innenliegende Abschnitte, soweit sie eine Verbindung mit dem außenlaufenden Rotor erlauben, sind umfasst. Die Welle, sofern das Rollenelement eine solche aufweist, kann gemäß dieser Ausführungsform antriebsseitig im Gestell oder im Antrieb gelagert sein. Allerdings sind auch Ausführungsformen möglich, in denen auf eine Welle verzichtet werden kann, aufgrund der engen Verbindung des Mantelabschnitts mit dem Rotor. Der Mantelabschnitt des Rollenelements und der Rotor sind zur weiteren Verbesserung der Drehsteifigkeit vorzugsweise direkt miteinander verbunden, womit gemäß einer besonders bevorzugten Ausführungsform eine einstückige oder teilweise einstückige Ausbildung umfasst ist.

Zur weiteren Reduzierung von mechanischen Komponenten lagert das Gestell das Rollenelement vorzugsweise nur auf einer Seite, während auf der entgegengesetzten Seite, d.h. der Antriebsseite, das Rollenelement über die Welle oder den Rotor im Antrieb gelagert ist. Auf diese Weise können sich das Rollenelement und der Rotor eine Lagerung teilen. Alternativ kann die Welle über zwei Lager am Gestell gelagert werden, wodurch ein Lager für den Rotor im Antrieb gegebenenfalls entfallen kann.

Vorzugsweise sind zwei Antriebe auf gegenüberliegenden Seiten des Gehäuses mit dem Rollenelement verbunden, um die Kraft- und Gewichtsverteilung zu vergleichmäßigen und/oder die Antriebsleistung unter Beibehaltung eines kompakten Bauraums zu erhöhen.

Der Rotor des Antriebs ist vorzugsweise ohne Zwischenschaltung eines Drehmomentgetriebes, insbesondere ohne Zwischenschaltung eines Untersetzungsgetriebe, mit dem Rollenelement verbunden. Indem auf ein Drehmomentgetriebe verzichtet wird, findet eine direkte und unmittelbare Drehmomentübertragung vom Antrieb auf das Rollenelement statt. Unter die Bezeichnung "Drehmomentgetriebe" fallen all jene Getriebeformen, die ein Eingangsdrehmoment oder eine Eingangsdrehzahl in ein Ausgangsdrehmoment oder eine Ausgangsdrehzahl anderer Größe umwandeln, die somit eine Drehmomentwandlung bzw. Drehzahlwandlung durchführen.

Der Antrieb kann in bestimmten Ausführungsvarianten über eine Spindel und/oder eine Kardanwelle mit der Welle verbunden sein. Dies kommt insbesondere bei Antrieben mit großer Leistung oder in widrigen Umgebungsbedingungen, etwa im Warmwalzwerk, in Betracht.

Gemäß einer bevorzugten Ausführungsform weist der Antrieb zusätzlich zum Elektromotor eine Bremse und/oder Haltevorrichtung auf, zum raschen Abbremsen und gegebenenfalls Arretieren des Rollenelements.

Der oben dargelegte Antrieb lässt sich modular aufbauen. Der Antrieb kann bei Bedarf durch weitere Module, die vorzugsweise zylindrisch oder scheibenförmig sind, erweitert werden. Mögliche Erweiterungsmodule umfassen beispielsweise ein Bremsmodul, Haltemodul, Leistungssteigerungsmodul mit Antriebsmitteln (etwa Rotor und Stator) zur Erhöhung der Leistung des Basismoduls, ein Getriebemodul und/oder ein Kühlmodul. Damit die Module miteinander kombinierbar sind, weisen sie technisch kompatible Komponenten, insbesondere miteinander verbindbare bzw. aneinander flanschbare Gehäuse bzw. Gestelle auf. Durch eine solche modulare Bauweise kann die Wiederholhäufigkeit baugleicher Teile (Motorscheiben, Statorscheiben, Statorbleche, Statorspulen, Bremsscheiben, Bremsbeläge usw.) erhöht werden, wodurch die Kosten reduziert und die Zuverlässigkeit der Vorrichtung erhöht werden können.

Der Antrieb weist vorzugsweise einen Drehgeber oder Geschwindigkeitsmesser zum Messen des Drehwinkels und/oder der Drehgeschwindigkeit auf. Der Drehgeber kann als eigenes Modul oder als Bestandteil eines Moduls, vorgesehen sein. Alternativ ist eine geberlose Fahrweise möglich.

Der Antrieb kann ferner mit einer Kühleinrichtung ausgestattet sein. Diese kann beispielsweise als separates Modul zwischen der Bremse und dem Elektromotor und/oder als Kühlmantel im oder am Motorgehäuse des Antriebs angeordnet sein. Die Kühlung kann etwa mittels eines Gebläses und/oder als Wasser- bzw. Fluidkühlung ausgebildet sein.

Eine etwaige Durchführung für Medien, etwa Hydrauliköl und/oder Kühlwasser, ist durch den Rotor des Antriebs möglich. Ferner kann der Antrieb einen oder mehrere integrierte Umrichter aufweisen.

Der dargelegte Direktantrieb kommt besonders bevorzugt zum Einsatz: in einem Walzwerk, wobei das Rollenelement eine Stützwalze oder eine Arbeitswalze ist, einer Metallbandbehandlungsanlage, wobei das Rollenelement eine Transportrolle, eine Spannrolle, eine Beschleunigungsrolle oder eine Rolle zum Zugaufbau oder Zugabbau des Metallbands ist, oder einem Bandspeicher mit einer Windenanordnung, wobei das Rollenelement eine Seilwinde ist.

Vorzugsweise weist der Antrieb eine Kupplung für den Rotor, besonders bevorzugt eine Bogenzahnkupplung, auf. Damit lassen sich bei der integrierten Bauweise gegebenenfalls kleine Versetzungen zwischen dem Antrieb und dem Rollenelement ausgleichen. Ferner kann es nützlich sein, das Rollenelement durch eine Kupplung rasch freigeben zu können, um das Rollenelement im Notfall oder in bestimmten Betriebsbedingungen vom Antrieb zu lösen.

Der Antrieb weist vorzugsweise auf: eine elektrische Bremseinrichtung, die eingerichtet ist, um die Vorrichtung, d.h. den Antrieb und/oder das Rollenelement, aus einem Arbeitszustand reibungsfrei in einen Haltezustand, in dem das Rollenelement im Wesentlichen stillsteht, abzubremsen; eine mechanische Halteeinrichtung, die eingerichtet ist, um die Vorrichtung bei Betätigung der mechanischen Halteeinrichtung im Haltezustand mechanisch zu arretieren; und eine Steuereinrichtung, die eingerichtet ist, um die elektrische Bremseinrichtung und die mechanische Halteeinrichtung so zu steuern, dass im Wesentlichen die gesamte Bewegungsenergie von der elektrischen Bremseinrichtung umgewandelt wird, während die mechanische Halteeinrichtung nur im Haltezustand der Vorrichtung betätig wird.

Das Abbremsen erfolgt in dieser bevorzugten Ausführungsform reibungsfrei mittels einer elektrischen Bremseinrichtung. Unter "reibungsfrei" ist hierbei die Abwesenheit von mechanischer Reibung zu verstehen, das Abbremsen erfolgt in diesem Sinne berührungslos. Materialinnere Prozesse, die beim elektrischen Bremsen auftreten können, wie etwa Gegen- oder Wirbelströme, fallen folglich nicht unter die Bezeichnungen "Reibung", "reibungsfrei" und dergleichen. Vorzugsweise wird der Elektromotor in einem Normalbetriebszustand an der geregelten Rampe eines speisenden Umrichters, der den Elektromotor mit Leistung versorgt, etwa durch Anpassung der Frequenz und Spannung, abgebremst. Die elektrische Bremseinrichtung, die beispielsweise als Gegenstrombremse oder Wirbelstrombremse ausgeführt sein kann, arbeitet reibungslos und somit im Wesentlichen verschleißfrei. Nachdem die Vorrichtung durch das Abbremsen mittels der elektrischen Bremseinrichtung den Haltezustand erreicht hat, wird die Vorrichtung gemäß dieser bevorzugten Ausführungsform durch Betätigen einer mechanischen Halteeinrichtung mechanisch arretiert. Die Arretierung erfolgt vorzugsweise auf eine kraftschlüssige oder formschlüssige Weise. Die mechanische Halteeinrichtung kann beispielsweise über Haltebacken auf eine Haltescheibe wirken, sie kann am Rollenelement oder an der Welle des Rollenelements oder auch am Rotor des Elektromotors vorgesehen sein. Die elektrische Bremseinrichtung und die mechanische Halteeinrichtung werden von der Steuereinrichtung nun so gesteuert, dass im Wesentlichen die gesamte Bewegungsenergie von der elektrischen Bremseinrichtung abgebaut bzw. umgewandelt wird, während die mechanische Halteeinrichtung nur im Haltezustand der Vorrichtung betätig wird. Die mechanische Halteeinrichtung hat somit die technische Funktion, die Vorrichtung im Haltezustand, d.h. in der Stillstandposition zu fixieren bzw. zu arretieren, ohne dass sie Bewegungsenergie durch Reibung abbaut.

Die mechanische Halteeinrichtung kann demzufolge besonders kompakt ausgeführt werden, da sie im Wesentlichen keine Bewegungsenergie umwandeln muss. Sie weist keine Verschleißteile auf, zumindest findet ein Verschleiß nur in geringem Maß statt. Ferner wird vermieden, dass Abriebpartikel von der mechanischen Halteeinrichtung in den Antrieb eindringen können. Wenn somit in diesem Zusammenhang davon die Rede ist, dass die Vorrichtung, das Rollenelement oder die Welle im Haltezustand "im Wesentlichen" stillsteht oder "im Wesentlichen" die gesamte Bewegungsenergie von der elektrischen Bremseinrichtung umgewandelt wird, dann ist damit gemeint, dass die elektrische Bremseinrichtung zum Abbau der gesamten Bewegungsenergie aus dem Arbeitszustand ausgelegt ist, während die mechanische Halteeinrichtung diesbezüglich keinen Beitrag leistet. Kleine Energien aus einer Kriechbewegung etwa, aus Erschütterungen und dergleichen können hingegen von der mechanischen Halteinrichtung aufgenommen und umgewandelt werden.

Vorzugsweise ist ein speisender Umrichter vorgesehen, der den Elektromotor des Antriebs im Arbeitszustand mit Leistung versorgt und die oben erwähnte Funktion zum Abbremsen der Vorrichtung in einem Normalbetriebszustand aufweist. In einem außerordentlichen Betriebszustand wird der speisende Umrichter zum Abbremsen vorzugsweise galvanisch vom Elektromotor getrennt und die Vorrichtung in den Haltezustand gebracht, indem Wicklungen des Elektromotors über einen Bremswiderstand und/oder eine Widerstand/Kondensator-Schaltung und/oder direkt kurzgeschlossen werden und/oder eine externe Gleichspannungsquelle aufgeschaltet wird. Die mechanische Halteeinrichtung muss somit auch in einem außerordentlichen Betriebszustand, etwa bei einer Störung des speisenden Umrichters, keine Bewegungsenergie aus dem Arbeitszustand in den Haltezustand umwandeln. Die gesamte Bewegungsenergie des Rollenelements und des Antriebs wird vorzugsweise in allen Betriebszuständen - beispielsweise Halt, Schnellhalt, Not-Halt, Not-Aus - von der elektrischen Bremseinrichtung umgewandelt. Die mechanische Halteeinrichtung übernimmt somit vorzugsweise in jedem Fall - auch im Notfall - lediglich die technische Funktion, die Vorrichtung in der Stillstandposition zu fixieren bzw. zu arretieren.

Vorzugsweise erfolgt die Betätigung der mechanischen Halteeinrichtung elektrisch, mechanisch, hydraulisch oder pneumatisch. Haltebacken, Haltescheibe, Kolben, Hydraulik- bzw. Pneumatikzylinder und Leitungen, Halteklammern, Haltestift - all solche Komponenten, die zum Aufbau der mechanischen Halteeinrichtung geeignet sind, können für geringe Kräfte ausgelegt und somit kompakt, leicht und kostengünstig realisiert werden.

Der speisende Umrichter kann weitere Funktionen zur Motorsteuerung umfassen, vorzugsweise eine Drehzahlmessung und/oder ein Verfahren zur Anpassung des Drehfelds in Abhängigkeit vom aktuellen Zustand der Maschine.

Der gemäß einer bevorzugten Ausführungsform dargelegte Antrieb mit elektrischer Bremseinrichtung und mechanischer Halteeinrichtung ist besonders gut als Direktantrieb geeignet. Denn bei einem Direktantrieb für Rollen, Walzen der Winden müssen, wie oben dargelegt, teilweise sehr hohe Drehmomente von einer Bremse gehalten werden können. Während herkömmliche Bremszangen dafür einen großen Bauraum erfordern, ist die beschriebene Kombination aus der elektrischen Bremseinrichtung und der mechanischen Halteeinrichtung zur Verwendung mit einem Direktantrieb optimal geeignet.

Der dargelegte Direktantrieb ist besonders gut für Rollen, Walzen und Winden in Walzwerken und Anlagen zur Bearbeitung von Metallbändern und Blechen anwendbar. Insbesondere sind Arbeits-, Stütz- und Prägewalzen in einem Walzwerk, Spannrollen, Transportrollen, Rollen zum Zugaufbau oder Zugabbau, Beschleunigungsrollen, Beschichtungsrollen und Seilwinden umfasst. Doch die Erfindung kann auch in anderen Bereichen umgesetzt werden, soweit sie die Behandlung bandförmiger Metallmaterialien, insbesondere von Stahl und NE-Metallen, betrifft.

Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei unter Bezugnahme auf die begleitenden Zeichnungen.

### Kurze Beschreibung der Figuren

Die Figur 1 zeigt schematisch den Aufbau einer Maschine, die einen Direktantrieb mit einem Elektromotor, eine vom Direktantrieb anzutreibende Arbeitsmaschine sowie eine Vorrichtung zum Abbremsen der Maschine aufweist.

Die Figuren 2a und 2b zeigen schematisch Vorrichtungen mit einer Rolle/Walze und einem Direktantrieb als Innenläufer.

Die Figur 3 zeigt schematisch eine Vorrichtung mit einer Rolle/Walze und einem Direktantrieb als Außenläufer.

Die Figur 4 zeigt schematisch eine Vorrichtung mit einer Rolle/Walze und einem Direktantrieb mit gelagertem Rotor.

Die Figur 5 zeigt schematisch eine Vorrichtung mit einer Rolle/Walze und einem Direktantrieb mit ungelagertem Rotor und Kühlmantel.

Die Figur 6 zeigt schematisch eine Vorrichtung mit einer Rolle/Walze und einem Direktantrieb mit ungelagertem Rotor und Kühlmodul.

Die Figur 7 zeigt schematisch eine Vorrichtung mit einer Rolle/Walze und einem Direktantrieb als eine Variante mit auswechselbarem Rollenkörper und axialer Kühleinrichtung.

Die Figur 8 zeigt schematisch eine Windenanordnung mit Seilwinden und zugehörigen Direktantrieben, wobei die Direktantriebe als Innenläufer konzipiert sind.

Die Figur 9 zeigt schematisch eine Windenanordnung mit Seilwinden und zugehörigen Direktantrieben, wobei die Direktantriebe als Außenläufer konzipiert sind.

Die Figur 10 zeigt schematisch eine Seilwinde und einen damit verbundenen Direktantrieb, wobei der Direktantrieb als Innenläufer konzipiert ist.

Die Figur 11 zeigt schematisch eine Seilwinde mit beidseitig angebrachten Direktantrieben, wobei die Direktantriebe als Innenläufer konzipiert sind.

Die Figur 12 zeigt schematisch eine Seilwinde und einen damit verbundenen Direktantrieb, wobei der Direktantrieb als Außenläufer konzipiert ist.

Die Figur 13 zeigt schematisch eine Seilwinde mit beidseitig angebrachten Direktantrieben, wobei die Direktantriebe als Außenläufer konzipiert sind.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente mit identischen Bezugszeichen versehen, und auf eine wiederholende Beschreibung dieser Elemente wird teilweise verzichtet, um Redundanzen zu vermeiden.

Bevor Ausführungsbeispiele für Vorrichtungen mit einer direktangetriebenen Rolle, Walze oder Winde dargestellt werden, soll zunächst ein beispielhafter Antrieb beschrieben werden, der als Direktantrieb geeignet ist, da er mit einer Haltevorrichtung ausgestattet ist, die durch eine Kombination aus einer elektrischen Bremseinrichtung und mechanischen Halteeinrichtung in der Lage ist, hohe Drehmomente trotz kompakter Bauform zuverlässig abzubremsen.

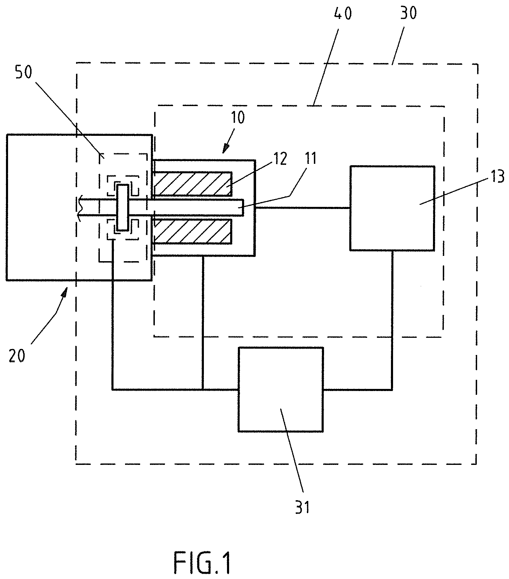

Die Figur 1 zeigt schematisch den Aufbau einer Maschine, die einen Antrieb 10 mit einem Elektromotor, eine vom Antrieb 10 anzutreibende Arbeitsmaschine 20, die ein Rollenelement, etwa eine Rolle, Walze oder Winde aufweist, sowie eine Haltevorrichtung 30 zum Abbremsen der Maschine aufweist. Die Haltevorrichtung 30 weist eine elektrische Bremseinrichtung 40 und eine mechanische Halteeinrichtung 50 auf.

Die vom Antrieb 10 anzutreibende Arbeitsmaschine 20 kann auf vielerlei Weise ausgeführt sein, beispielweise als eine oder mehrere Arbeits- und/oder Stützwalzen in einem Walzwerk, Spannrolle oder Transportrolle, als Haspelanlage, Beschichtungsanlage, fliegende Schere, Winde in einem Vertikal- oder Horizontalspeicher usw..

Der Elektromotor, vorzugsweise ein Synchronmotor oder Torquemotor, des Antriebs 10 weist einen Rotor 11 und einen Stator 12 auf, der vorzugsweise direkt an einem Gestell oder Gehäuse der Arbeitsmaschine 20 befestigt ist. Der Rotor 11 ist mit einer Welle der Arbeitsmaschine 20 verbunden, wodurch die Drehung des Rotors 11 auf die Welle und damit auf bewegliche Teile der Arbeitsmaschine 20 übertragen wird. Bei einer "direkten" Befestigung oder Verbindung oder synonym "integralen" Befestigung oder Verbindung im Sinne der vorliegenden Anmeldung stehen die betreffenden mechanischen Komponenten auf eine unmittelbare Weise miteinander in Kontakt. Dies kann beispielsweise durch Verschrauben, Vernieten oder Verschweißen erreicht werden, aber auch eine einstückige Ausbildung ist umfasst. Die Arbeitsmaschine 20 und der Antrieb 10 sind auf diese Weise miteinander "verblockt". Durch die besondere Integration wird einerseits eine ausgesprochen hohe Drehsteifigkeit zwischen dem Antrieb 10 und der Welle der Arbeitsmaschine 20 erzielt.

Die enge integrale Verbindung zwischen dem Antrieb 10 und der Arbeitsmaschine 20 erlaubt einen bauraumsparenden Anlagenbau. Damit gehen Vereinfachungen beim Anlagenbau einher, beispielsweise durch eine Fundamenteinsparung, eine bessere Zugänglichkeit der Anlage, eine Verringerung der Reserveteile, eine Verringerung des Wartungsaufwands, eine Verkleinerung der Halle. Die Motoren sind nicht oder weniger durch Bunde oder andere herabfallende Teile gefährdet. Ein großer Vorteil des hier dargestellten Antriebskonzepts wird bei der thermischen Auslegung der Motoren deutlich. Durch die innige Verbindung des Antriebs 10 mit der Arbeitsmaschine 20 kann die Masse und die Oberfläche der mechanischen Einrichtung zur Wärmeableitung mitgenutzt werden. Die Leistung des Elektromotors kann dadurch ohne bauliche Maßnahmen gesteigert werden. Die Verlustleistung des Antriebsstrangs wird erheblich reduziert. Auf eine Fremdlüftung oder Wasserkühlung kann in vielen Fällen verzichtet werden. Der Antrieb 10 kann als Innenläufer oder Außenläufer konzipiert sein. Das Integralkonzept bietet zudem Verbesserungen im Hinblick auf die Sicherheit, da auf drehende äußere Antriebsteile, wie etwa Gelenkwellen, Kupplungen, Bremsscheiben usw., verzichtet werden kann. Es entfallen Bauteile wie Lager, Wellen, Kupplungen, Motoruntersätze, Getriebeuntersätze usw.. Eine Verringerung der sich bewegenden Teile hat zudem eine höhere Regelgenauigkeit zur Folge, was sich wiederum positiv auf die Qualität der herzustellenden Produkte auswirkt.

Die Haltevorrichtung 30 weist eine Steuereinrichtung 31 auf, welche die elektrische Bremseinrichtung 40, die mechanische Halteeinrichtung 50 sowie gegebenenfalls Funktionen des Antriebs 10 und/oder seines speisenden Umrichters 13 steuert. Im Folgenden werden Steuerfunktionen der Steuereinrichtung 31 für verschiedene Betriebszustände, insbesondere den Normalbetriebszustand und einen außerordentlichen Betriebszustand, beschrieben:
Zum Abbremsen oder Anhalten der Arbeitsmaschine 20 ist die Haltevorrichtung 30 vorgesehen, welche die elektrische Bremseinrichtung 40 und die mechanische Halteeinrichtung 50 aufweist. Hierbei findet die Steuerung über die Steuereinrichtung 31 so statt, dass die elektrische Bremseinrichtung 40 die Abbremsung der Arbeitsmaschine 20 auf eine reibungsfreie Weise bis zum Stillstand oder nahezu bis zum Stillstand übernimmt, während die mechanische Halteeinrichtung 50 die Arbeitsmaschine 20 nach Erreichen der Stillstandposition arretiert bzw. hält. Das kann durch eine formschlüssige oder auch kraftschlüssige Verbindung geschehen, etwa mittels einer auf dem Rotor 11 oder der Welle der Arbeitsmaschine 20 mitlaufenden Bremsscheibe, an die Bremsbeläge beidseitig gepresst werden. Die Ansteuerung kann beispielsweise elektrisch, mechanisch, hydraulisch oder pneumatisch erfolgen. Ein geringes Abbremsen von einem fast stillstehenden Zustand der Arbeitsmaschine 20 bis zum absoluten Stillstand kann von der mechanischen Halteeinrichtung 50 übernommen werden, wie es oben dargelegt ist.

Im Normalbetriebszustand wird der Antrieb 10 an der geregelten Rampe (Frequenz, Spannung) eines speisenden Umrichters 13 abgebremst. Dieser speisende Umrichter 13, der den Motor des Antriebs 10 mit Leistung versorgt, ist ein elektronisches Gerät und kann Teil des Antriebs 10, Teil der Arbeitsmaschine 20 oder auch ein eigenständiges Bauteil sein. Der Elektromotor des Antriebs 10 kann als Drehstrommotor ausgelegt sein. Der Umrichter 13 kann neben der Leistungsversorgung zusätzliche Funktionen zur Motorsteuerung umfassen, wie beispielsweise eine Drehzahlmessung und/oder Verfahren zur Anpassung des Drehfelds in Abhängigkeit vom aktuellen Zustand der Maschine. Insbesondere umfasst der Umrichter 13 eine Funktion zum Abbremsen der Arbeitsmaschine durch Anpassen der Frequenz und Spannung bis zum Stillstand oder fast bis zum Stillstand der Arbeitsmaschine 20.

Bei einer Störung des Umrichters 13 ist ein Abbremsen des Antriebs 10 bzw. der Arbeitsmaschine 20 auf diese Weise nicht möglich. Die elektrische Bremseinrichtung 40 ist so eingerichtet, dass in diesem Fall der Umrichter 13 galvanisch vom Motor des Antriebs 10 getrennt wird, gleichzeitig die Motorwicklungen über einen Bremswiderstand, eine Widerstand/Kondensator-Schaltung oder direkt kurzgeschlossen werden oder eine externe Gleichspannungsquelle aufgeschaltet wird. Auf diese Weise wird im Notfall sichergestellt, dass die Arbeitsmaschine 20 rasch abgebremst werden kann.

Insbesondere erlaubt der oben dargelegte Aufbau der elektrischen Bremseinrichtung 40 ein reibungsfreies, d.h. nicht-mechanisches Abbremsen der Arbeitsmaschine 20 nicht nur im Normalbetrieb, sondern auch im Fall einer Störung des speisenden Umrichters 13. Die gesamte Bewegungsenergie der Arbeitsmaschine 20 und des Antriebs 10 wird in allen Betriebszuständen - beispielsweise Halt, Schnellhalt, Not-Halt, Not-Aus - von der elektrischen Bremseinrichtung 40 abgebaut bzw. umgewandelt. Die mechanische Halteeinrichtung 50 übernimmt nun in jedem Fall (auch im Notfall) lediglich die Aufgabe, die Arbeitsmaschine 20 in der Stillstandposition zu fixieren. Durch das Abbremsen der Arbeitsmaschine 20 allein aufgrund der elektrischen Bremseinrichtung 40 in allen Betriebszuständen wird die Energie von der mechanischen Halteeinrichtung 50 nicht in Wärme umgewandelt. Es wird keine Energie in Reibung umgewandelt, und dies gilt nicht nur für den Normalbetrieb, sondern insbesondere auch bei einer Störung des speisenden Umrichters 13. Die mechanische Halteeinrichtung 50 kann demzufolge besonders kompakt ausgeführt werden, da sie auch im Notfall keine Bewegungsenergie umwandeln muss. Außerdem weist die mechanische Halteeinrichtung 50 dadurch keine Verschleißteile auf, zumindest findet ein Verschleiß nur in geringem Maß statt. Damit wird ferner vermieden, dass Abriebelemente von der mechanischen Halteeinrichtung 50 in den Antrieb 10 eindringen können. Vorzugsweise ist die mechanische Halteeinrichtung 50 im Gehäuse des Antriebs 10 integriert oder direkt an diesen angeflanscht. Die mechanische Halteeinrichtung 50 sowie die elektrische Bremseinrichtung 40 können Teile oder Module eines Motorbaukastens für den Antrieb 10 sein.

Der dargelegte Antrieb 10 fungiert als Direktantrieb, wodurch die Komplexität herkömmlicher Antriebsstränge (bestehend beispielsweise aus einem Elektromotor, einer Motorkupplung inkl. Bremse, einem Untersetzungsgetriebe und einer Maschinenkupplung) deutlich reduziert werden kann. Dabei befindet sich der Antrieb 10, insbesondere der Stator 12 des Antriebs 10, vorzugsweise direkt an oder in der Arbeitsmaschine 20.

Der dargelegte Antrieb 10 lässt sich modular aufbauen. Der Elektromotor als Basismodul wird in diesem Sinne durch die mechanische Halteeinrichtung 50 und die elektrische Bremseinrichtung 40 als Module erweitert. Der Antrieb 10 kann bei Bedarf durch weitere Module erweitert werden. Mögliche Erweiterungsmodule umfassen beispielsweise ein Leistungssteigerungsmodul mit Antriebsmitteln (Rotor und Stator) zur Erhöhung der Leistung des Basismoduls und/oder ein Kühlmodul, das mittels eines Gebläses oder einer Fluidkühlung den Antrieb und gegebenenfalls Teile der Arbeitsmaschine kühlt. Damit die Module miteinander kombinierbar sind, weisen sie technisch kompatible Komponenten, insbesondere miteinander verbindbare bzw. aneinander flanschbare Gehäuse auf. Durch eine solche modulare Bauweise kann die Wiederholhäufigkeit baugleicher Teile (Motorscheiben, Statorscheiben, Statorbleche, Statorspulen usw.) erhöht werden, wodurch die Kosten reduziert und die Zuverlässigkeit der Vorrichtung erhöht werden können.

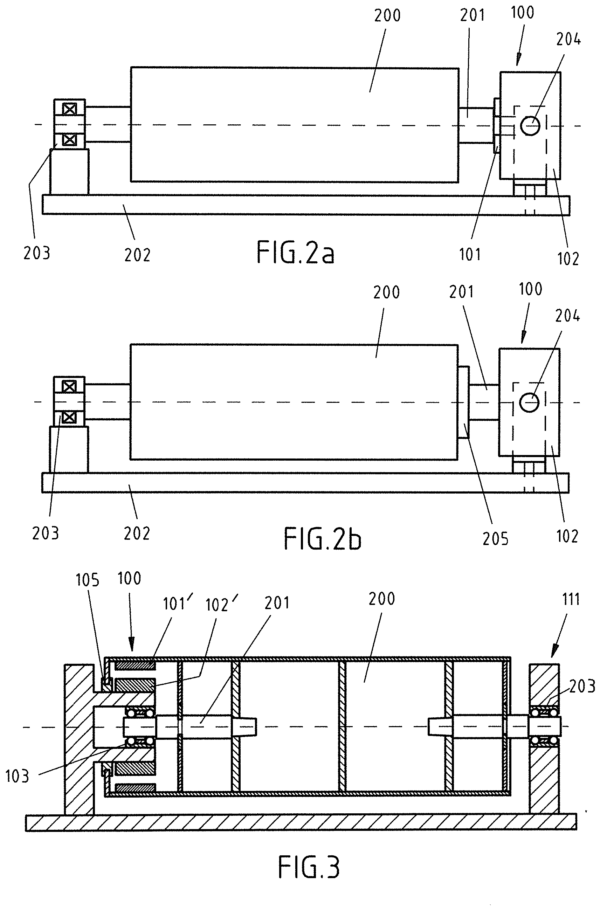

Die Figuren 2a und 2b zeigen schematisch Vorrichtungen mit einem als Innenläufer ausgeführten Antrieb 100, der beispielsweise der oben dargelegte Antrieb 10 sein kann, und einer durch den Antrieb 100 direkt angetriebenen Rolle oder Walze (auch unter der Bezeichnung "Rolle/Walze" zusammengefasst) 200. Die Rolle/Walze 200 kann beispielsweise eine Spannrolle oder eine Arbeits- oder Stützwalze in einem Walzwerk sein. Die Rolle/Walze 200 kann ferner als Coater- bzw. Beschichtungsrolle ausgelegt sein, mit der auf das zu bearbeitende Material eine Schicht, etwa eine Farb-/Lackschicht, Beize usw., aufgetragen werden kann.

Zur Anbindung der Rolle/Walze 200 an den Antrieb 100 zeigt die Figur 2a eine Variante, bei der die Rolle/Walze 200 eine Welle 201, auch als Wellenzapfen bezeichnet, aufweist, der wiederrum direkt mit dem Rotor oder Läufer 101 des Antriebs 100 verbunden ist, beispielsweise darin eingespannt ist. Die Rolle/Walze 200 ist auf diese Weise direkt oder integral mit dem Rotor 101 des Antriebs 100 verbunden. Der Rotor 101 und die Welle 201 sind gemäß einer besonders bevorzugten Ausführungsvariante einstückig ausgebildet.

In der Systematik der Figuren 2a bis 13 ist der Antrieb mit dem Bezugszeichen 100 bezeichnet, statt dem Bezugszeichen 10 der Figur 1, um deutlich zu machen, dass der in der Figur 1 dargestellte Antrieb ein beispielhafter, wenn auch bevorzugter Antrieb ist. Diese Unterscheidung gilt analog für die mit Bezugszeichen versehenen Komponenten des Antriebs, wie etwa den Rotor 11 in der Figur 1 und den Rotor 101 in der Figur 2a und anderen Ausführungsbeispielen.

Mit dem Bezugszeichen 202 ist das Gestell oder Gerüst der Rolle/Walze 200 bezeichnet, das ein Lager 203 zur drehbaren Lagerung der Rolle/Walze 200 auf einer Seite aufweist. Durch die direkte Anbindung an den Antrieb 100 kann gegebenenfalls, wie in Figur 2a dargestellt, auf ein antriebsseitiges Lager für die Rolle/Walze 200 verzichtet werden. Stattdessen ist das Gehäuse 102 oder der Stator des Antriebs 100 über eine kardanische Aufhängung 204 mit dem Gestell 202 verbunden.

Die Vorrichtung weist somit einen Antrieb 100 zum rotarischen Betrieb der Rolle/Walze 200 auf, wobei einerseits eine hohe Drehsteifigkeit zwischen dem Antrieb 100 und der Rolle/Walze 200 sichergestellt ist, auf der anderen Seite eine oder mehrere herkömmliche Komponenten im Antriebsstrang, wie etwa Getriebe, Kupplungen, Kardanwellen usw., entfallen können.

Das Ausführungsbeispiel der Figur 2b zeigt eine Vorrichtung ähnlich der der Figur 2a, wobei die Verbindung zwischen dem Antrieb 100 und der Rolle/Walze 200 mittels eines Flansches 205 bewerkstelligt ist. Deutlich zu erkennen ist auch in diesem Beispiel, dass eine motorseitige Lagerung der Rolle/Walze 200 entfällt, beziehungsweise vom Antrieb 100 übernommen wird. Außerdem wird die Aufhängung 204 und das Gestell 202 zur Abstützung des antriebsseitigen Endes der Rolle/Walze 200 mitgenutzt.

Die Figur 3 zeigt schematisch eine Vorrichtung mit einer Rolle/Walze 200 und einem Direktantrieb 100, deren Aufbau sich von den Varianten der Figuren 2a und 2b im Wesentlichen dadurch unterscheidet, dass der Antrieb 100 als Außenläufer ausgeführt ist. Zu diesem Zweck befinden sich die stationären Teile des Elektromotors, d.h. etwa der Stator 102', im Innern des Antriebs 100, während der Rotor 101' außen um den Stator 102' umläuft. Der Rotor 101' kann in diesem Fall direkt in die Rolle/Walze 200 übergehen, mit dieser einstückig ausgebildet oder starr mit der Rolle/Walze 200 verbunden sein. Dazu steht der Mantelabschnitt der Rolle/Walze 200 mit dem Rotor 101' in Kontakt. Unter dem "Mantelabschnitt" wird hierbei nicht nur der äußerste Umfang der zylindrischen Rolle/Walze 200 verstanden, sondern auch Abschnitte, die radial außerhalb der Welle 201 der Rolle/Walze 200 liegen, sind umfasst, sofern sie eine Anbindung der Rolle/Walze 200 an den außenliegenden Rotor 101' erlauben. Die Welle bzw. der Wellenzapfen 201 ist in einem im Antrieb 100 integrierten Lager 103, das in einem Lagergehäuse eingebaut ist, drehbar gelagert. In bestimmten Ausführungsbeispielen, bei einer äußeren Lagerung des Rotors 101' oder der Rolle/Walze 200 kann gegebenenfalls auf einen Wellenzapfen 201 und dessen Lager 103 verzichtet werden.

Auch im Beispiel der Figur 3 ist der Stator 102' mechanisch starr mit dem Gestell 202 verbunden. In der Darstellung der Figur 2 ist ferner eine im Antrieb 100 integrierte Bremse 105 gezeigt, die als Hochleistungsbremse beispielsweise durch Druckluft betätigbar ausgeführt sein kann. Die integrierte Bremse 105 kann auch der mechanischen Halteeinrichtung 50 aus der Ausführungsform der Figur 1 entsprechen, wobei das Abbremsen und Halten der Vorrichtung auf die diesbezüglich beschriebene kombinierte elektrische und mechanische Weise erfolgt. Die Anwendung der Ausführungsform der Figur 1 ist auch für die vorigen und nachfolgenden Ausführungsbeispiele möglich, ohne dass dies in jedem Fall explizit gesagt ist. Ferner ist die Vorrichtung des vorliegenden Ausführungsbeispiels der Figur 3 mit einem Gebersystem 111 ausgestattet, das als Drehgeber oder Geschwindigkeitsmesser den Drehwinkel und/oder die Drehgeschwindigkeit der Rolle/Walze 200 misst.

Die Vorrichtung der Figur 3 weist somit einen Antrieb 100 zum rotarischen Betrieb der Rolle/Walze 200 auf, wobei einerseits eine hohe Drehsteifigkeit zwischen dem Antrieb 100 und der Rolle/Walze 200 sichergestellt ist, auf der anderen Seite eine oder mehrere herkömmliche Komponenten im Antriebsstrang, wie etwa Getriebe, Kupplungen, Kardanwellen usw., entfallen können.

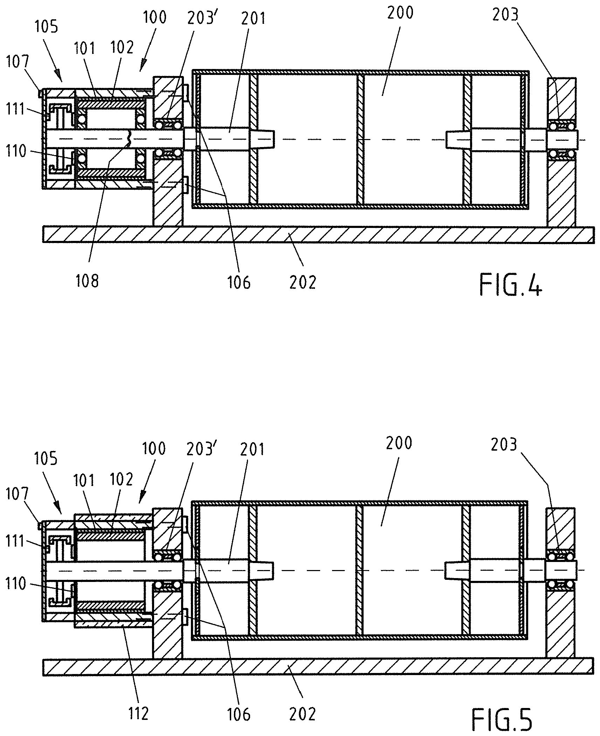

Die Figur 4 zeigt schematisch eine Vorrichtung mit einer Rolle/Walze 200 und einem Direktantrieb 100 als Innenläufer, mit einem über Lager 109 gelagerten Rotor 101. Bei diesem Ausführungsbeispiel ist die Rolle/Walze 200 auf beiden Seiten am Gerüst 202 mittels Lager 203 und 203' gelagert. Das zweite Lager 203' kann durch die enge Integration auch als Komponente des Antriebs 100 angesehen werden. Die Rolle/Walze 200 ist über den Wellenzapfen 201 direkt mit dem Antrieb 100 verbunden. Der Stator 102 ist über eine Verschraubung 106 direkt mit dem Gerüst 202 verschraubt, wodurch eine drehsteife Kraftübertragung vom Antrieb 100 auf die Rolle/Walze 200 erzielt wird. Der Antrieb 100 verfügt ferner über ein Bremsmodul 105, das über einen Pneumatikanschluss 107 betätigt, etwa geöffnet wird. Das Bremsmodul 105 weist eine Bremsscheibe und Bremsbacken auf, die ohne Bezugszeichen in der Figur gezeigt sind. Für technische Details einer beispielhaften Hochleistungsbremse sei nochmals auf die Figur 1 und deren Erläuterung verwiesen. Im Ausführungsbeispiel der Figur 4 ist im Antrieb 100 ferner eine flexible Kupplung 108 mit Lagern 109 vorgesehen, wodurch der Rotor 101 schnell vom Wellenzapfen 201 der Rolle/Walze 200 getrennt werden kann. Zum Ausgleich kleinerer Versetzungen zwischen der Rolle/Walze 200 und dem Antrieb 100 kann im Wellenzapfen 201 eine Bogenzahnkupplung (nicht dargestellt) vorgesehen sein. Fangmagnete 110 dienen dazu, magnetische Teilchen, die durch den Betrieb der Bremse 105 erzeugt werden können, von den Antriebskomponenten fernzuhalten. Der Antrieb 100 ist ferner mit einem Gebersystem 111 ausgestattet, das als Drehgeber oder Geschwindigkeitsmesser den Drehwinkels und/oder die Drehgeschwindigkeit der Rolle/Walze 200 misst.

Die Ausführungsform der Figur 5 unterscheidet sich von der der Figur 4 darin, dass der Rotor 101 antriebsseitig ungelagert ist. Durch die integrale oder einstückige Ausführung des Rotors 101 und der Welle 201 werden die Lager 203' und 203 der Rolle/Walze 200 vom Antrieb 100 mitgenutzt. Ferner weist der Antrieb 100 der Figur 5 einen Kühlmantel 112 auf. Der Kühlmantel 112 ist Teil einer Kühleinrichtung, mit der der Antrieb 100 optional ausgestattet werden kann. Der Kühlmantel 112 kann im Gehäuse des Antriebs 100 oder, wie in der Figur 5 gezeigt, direkt am Stator 102, der als Oberbegriff in der vorliegenden Anmeldung das Gehäuse des Antriebs 100 umfasst, vorgesehen sein.

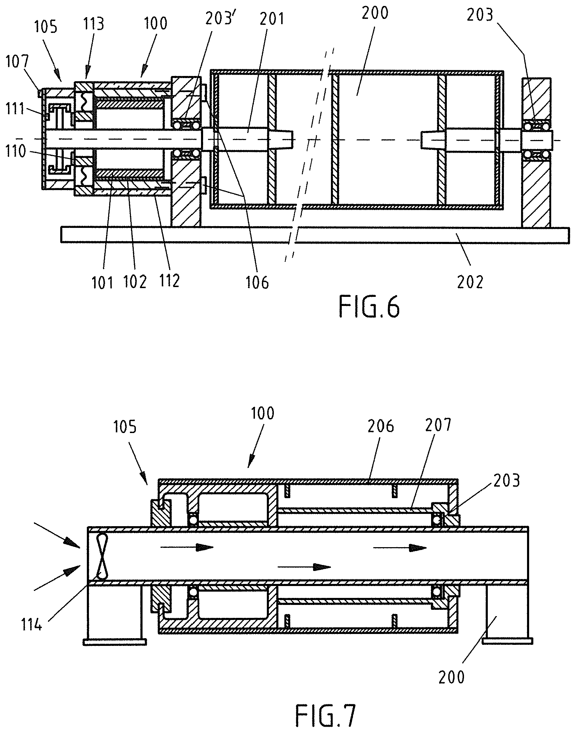

Eine alternative Form der Kühlung wird mittels eines Kühlmoduls 113 gemäß der Ausführungsform der Figur 6 realisiert, das als separates, zylindrisches Modul zwischen der Hochleistungsbremse 105 und dem Elektromotor des Antriebs 100 angeordnet ist. Die Kühlung kann über ein Gebläse und/oder als Wasser- bzw. Fluidkühlung ausgebildet sein. Die Figur 6 zeigt, wie das Grundmodul des Antriebs 100 durch zwei Zusatzmodule - das Kühlmodul 113 und die Hochleistungsbremse 105 - erweiterbar ist.

Die Figur 7 zeigt schematisch eine Vorrichtung mit einer Rolle/Walze 200 und einem Direktantrieb 100 als eine Variante mit auswechselbarem Rollenkörper 206. Der Rollenkörper 206 sitzt auf einem Rollenuntergestell 207. Im vorliegenden Ausführungsbeispiel überragt der zylindrische Mantel des Rollenkörpers den Antrieb 100, so dass dieser zumindest teilweise in der Rolle/Walze 200 aufgenommen und auf diese Weise integriert ist. Der Rollenkörper 206 kann bei Bedarf, etwa zur Wartung der Maschine oder Änderung des Durchmessers oder anderer Eigenschaften der Rolle/Walze 200, auf einfache Weise demontiert und gegebenenfalls ausgewechselt werden, indem dieser modulartig mit dem Rollenuntergestell 207 und dem Antrieb 100 zusammenwirkt. Ferner zeigt die Figur 7 eine weitere Kühlvariante, die hier als axiale Kühleinrichtung 114 realisiert ist. Entlang der Mittelachse der zylindrischen Gesamtkonstruktion aus Antrieb 100 und Rolle/Walze 200 verläuft ein Rohr, durch das ein Kühlfluid strömt, um den Antrieb 100 und die Rolle/Walze 200 von innen zu kühlen.

Die Figuren 2a bis 7 betrafen Ausführungsbeispiele für Rollen/Walzen, beispielsweise Stützrollen oder Walzen in einem Walzwerk, Transport- oder Beschleunigungsrollen. Im Folgenden werden Ausführungsbeispiele beschrieben, die den Direktantrieb von Seilwinden betreffen, die in horizontalen oder vertikalen Bandspeichern zum Einsatz kommen.

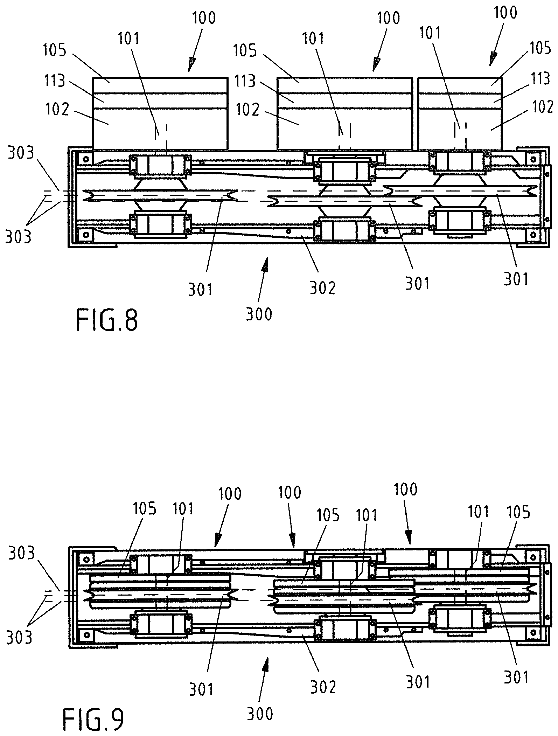

In Bandbehandlungsanlagen, insbesondere Walzwerken, werden Bandspeicher eingesetzt, um die Bearbeitungsmaschinen kontinuierlich mit Bandmaterial zu versorgen. Dazu trennen Bandspeicher beispielsweise einen diskontinuierlichen Anlagenbereich (Einlauf, Auslauf, SPM usw.) vom stabilen Bandlauf (Ofen, Zinkpott, Coater usw.). Das Band wird hierbei über eine oder mehrere Umlenkrollen in einer Bandschlaufe von variabler Größe gehalten. Zur Verstellung der Bandschlaufe können Windenanordnungen verwendet werden, wie sie beispielsweise in den Figuren 8 und 9 dargestellt ist.

Die Windenanordnung 300 der Figur 8 weist mehrere (im vorliegenden Beispiel drei) Winden 301 auf, die drehbar in einem Windengestell 302 gelagert sind und als Seilwinden für einen Horizontalspeicher fungieren. Jede Winde 301 wird in diesem Beispiel von je einem Antrieb 100, die als Direktantriebe ausgeführt sind, drehbar angetrieben, als sogenannter Bergwerksantrieb. Ein Seil, das mittels der Windenanordnung 300 auf- und abgerollt wird, ist mit dem Bezugszeichen 303 bezeichnet. Die Direktantriebe 100 sind im vorliegenden Ausführungsbeispiel der Figur 8 als Innenläufer konzipiert, wobei jeder Direktantrieb 100 modulartig aufgebaut ist, aus einem Elektromotor mit einem Stator 102 und einem Rotor 101, einem Bremsmodul 105 und einem zwischen dem Bremsmodul 105 und dem Elektromotor angeordneten Lüftermodul 113. Im vorliegenden Ausführungsbeispiel ist der Stator 102 direkt und mechanisch starr am Windengestell 302 befestigt. Zur Bereitstellung sehr hoher Drehmomente kann in den Direktantrieb 100 ein Untersetzungsgetriebe integriert werden, allerdings wird gemäß einer bevorzugten Ausführungsform auf ein solches Untersetzungsgetriebe verzichtet.

Das Ausführungsbeispiel der Figur 9 unterscheidet sich von dem der Figur 8 darin, dass in der Figur 9 eine Variante der Windenanordnung 300 gezeigt ist, bei der die Direktantriebe 100 als Außenläufer konzipiert sind. Die Direktantriebe 100 weisen jeweils einen außenliegenden Rotor 101, der direkt und mechanisch starr mit der zugehörigen Winde 301 verbunden ist, um diese in Drehung zu versetzen, einen innenliegenden (nicht dargestellten Stator) und ein Bremsmodul 105 auf. Der Antrieb 100 ist auf diese Weise direkt im Windengestell 302 eingebaut, wobei die Integration zwischen Antrieb 100 und Winde 301 dadurch besonders stark ausgeprägt ist, dass der Antrieb 100 die Winde 301 sandwichartig einfasst.

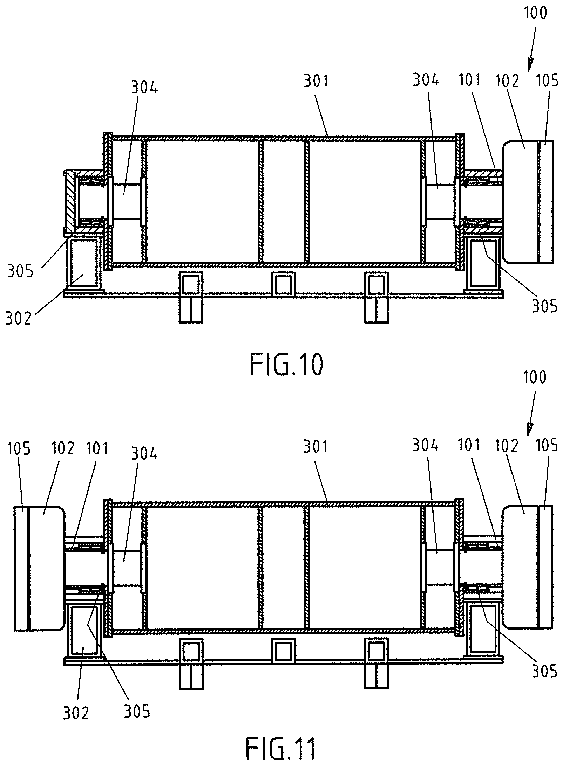

Ein weiteres Ausführungsbeispiel einer Seilwinde 301 mit einem Direktantrieb 100 für einen Vertikal- oder Horizontalspeicher geht aus der Figur 10 hervor. Gezeigt ist eine Variante, in der der Direktantrieb 100 als Innenläufer konzipiert ist. Der Direktantrieb 100 ähnelt dem der Figur 8, wobei auf ein Kühlmodul verzichtet wurde. Der Rotor 101 des Direktantriebs 100 und die Welle 304 der Winde 301 sind integral, vorzugsweise einstückig, ausgebildet. Dadurch ist es möglich, dass die beiden windenseitigen Lager 305 vom Rotor 101 des Direktantriebs 100 mitgenutzt werden. Auf ein zusätzliches Lager im Innern des Direktantriebs kann somit gegebenenfalls verzichtet werden.

In den dargestellten Ausführungsbeispielen war stets ein Direktantrieb für eine anzutreibende Rolle/Walze oder Winde vorgesehen. Jedoch können auch mehrere Direktantriebe einseitig oder beidseitig an der Rolle/Walze oder Winde angeordnet sein. Gleichermaßen kann ein Direktantrieb mehrere Rollen/Walzen oder Winden antreiben.

Ein Ausführungsbeispiel einer Seilwinde 301 für einen Vertikal- oder Horizontalspeicher mit beidseitigem Direktantrieb 100 geht aus der Figur 11 hervor. Im Übrigen ähnelt der Aufbau dem der Figur 10. Ein solcher beidseitiger Antrieb ist auf analoge Weise für die in den Figuren 2a bis 7 dargestellten Rollen/Walzen 200 möglich.

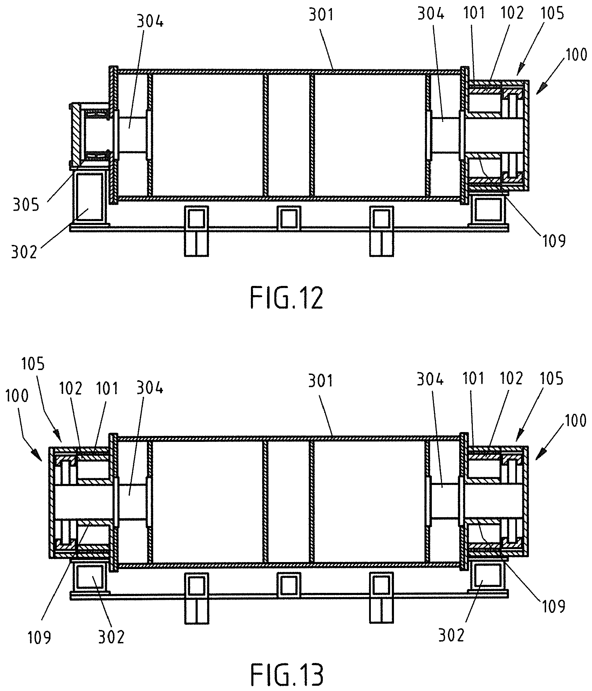

Ein weiteres Ausführungsbeispiel einer Seilwinde 301 mit einem Direktantrieb 100 für einen Vertikal- oder Horizontalspeicher geht aus der Figur 12 hervor. Gezeigt ist eine Variante, in welcher der Direktantrieb 100 als Außenläufer konzipiert ist und auf diese Weise in die Winde 301 integriert ist, ähnlich etwa den Ausführungsbeispielen, die für Rollen/Walzen mit Bezug auf die Figuren 3 und 7 beschrieben sind. Der Direktantrieb 100 weist einen außenliegenden Rotor 101 mit Magneten auf, der integral oder einstückig mit der Winde 301 vorgesehen ist. Der innenliegende Stator 102 ist fest mit dem Windengestell 302 verbunden. Die Welle 304 der Winde 301 ist über ein Lager 109 am Stator 102 drehbar gelagert, wodurch eine besonders enge Integration zwischen dem Direktantrieb 100 und der Winde 301 möglich ist. Das Lager 109 sitzt in einem Lagergehäuse, das in der Figur 12 gezeigt, jedoch ohne Bezugszeichen versehen ist. Ein ähnliches Ausführungsbeispiel, jedoch wie bei der Figur 11 mit beidseitigem Direktantrieb für eine Drehmomenterhöhung und/oder gleichmäßigere Kraft- und Gewichtsverteilung geht aus der Figur 13 hervor.

Für alle dargestellten Ausführungsformen gilt: Eine Durchführung für Medien, etwa Hydrauliköl und/oder Kühlwasser, ist von der Antriebsseite möglich, etwa indem entsprechende Leitungen durch den innenliegenden Rotor oder Stator geführt werden. Die enge, integrale Verbindung zwischen dem Antrieb und der Arbeitsmaschine erlaubt einen bauraumsparenden Anlagenbau. Damit gehen Vereinfachungen beim Anlagenbau einher, beispielsweise durch eine Fundamenteinsparung, eine bessere Zugänglichkeit der Anlage, eine Verringerung der Reserveteile, eine Verringerung des Wartungsaufwands, eine Verkleinerung der Halle. Die Motoren sind nicht oder weniger durch Bunde oder andere herabfallende Teile gefährdet. Ein großer Vorteil des hier dargestellten Konzepts wird bei der thermischen Auslegung der Motoren deutlich. Durch die innige Verbindung des Antriebs mit der Arbeitsmaschine kann die Masse und die Oberfläche der mechanischen Einrichtung zur Wärmeableitung mitgenutzt werden. Die Leistung der Elektromotoren kann dadurch ohne bauliche Maßnahmen gesteigert werden. Die Verlustleistung des Antriebsstrangs wird erheblich reduziert. Auf eine Fremdlüftung oder Wasserkühlung kann in vielen Fällen verzichtet werden. Die Motoren können als Innenläufer oder Außenläufer konzipiert sein. Das beschriebene Integralkonzept bietet zudem Verbesserungen im Hinblick auf die Sicherheit, da auf drehende äußere Antriebsteile, wie etwa Gelenkwellen, Kupplungen, Bremsscheiben usw., verzichtet werden kann. Es entfallen Bauteile wie Lager, Wellen, Kupplungen, Motoruntersätze, Getriebeuntersätze usw.. Eine Verringerung der sich bewegenden Teile hat zudem eine höhere Regelgenauigkeit zur Folge, was sich wiederum positiv auf die Qualität der herzustellenden Produkte auswirkt.

Die Reduzierung der Bauteile im Vergleich mit einem herkömmlichen Antriebsstrang äußert sich dadurch, dass auf Zahnräder, Kupplungen und Wälzlager in bestimmten Ausführungsformen ganz, zumindest aber teilweise verzichtet werden kann. Bewegliche und stationäre Komponenten werden deutlich reduziert, wodurch eine höhere Drehsteifigkeit, eine verbesserte Regelgüte und ein höherer Wirkungsgrad des Antriebssystems erzielt werden. Die Notwendigkeit einer Ölschmierung kann teilweise entfallen, wodurch die Verlustleistung des Antriebs weiter verringert wird. Motorlüfter oder Wasserkühler können entfallen oder kleiner ausfallen, da das Gestell der Arbeitsmaschine und der Stator des Antriebs eng miteinander integriert sind, wodurch die Verlustleistung weiter reduziert wird. Durch eine deutliche Verringerung von Verschleißteilen, wie etwa Zahnrädern und deren Lager, verbessert sich die Wartungsfreundlichkeit und Zuverlässigkeit der Maschine. Darüber hinaus ist der Antriebsstrang insgesamt ausgesprochen belastbar, insbesondere mit Blick auf etwaige Stoßbelastungen. Ferner werden eine Verminderung von Betriebsgeräuschen und des sicherheitstechnischen Aufwands erreicht, etwa durch Wegfall von Abdeckungen für bewegliche Teile. Es vereinfacht sich die Anlagenplanung, da die Antriebsstränge im Allgemeinen mit viel Aufwand auf einem Fundament individuell geplant werden müssen. Bei einer Integration oder "Verblockung" des Antriebs mit dem Rollenelement, etwa der Rolle/Walze oder Winde, wie oben im Detail beschrieben, verringert sich der Aufwand bei der Anlagenplanung. Der Antrieb kann zudem gegebenenfalls schon ab Werk mit dem Gestell der Arbeitsmaschine verblockt werden. Damit kann die Vorrichtung in der Fertigungsstätte getestet werden und kommt geprüft auf die Baustelle, wodurch sich die Endmontage vereinfacht und die Maschine schnell in Betrieb genommen werden kann.

### Bezugszeichenliste

- 10: Antrieb/Direktantrieb
- 11: Rotor
- 12: Stator
- 13: speisender Umrichter
- 20: Arbeitsmaschine
- 30: Haltevorrichtung
- 31: Steuereinrichtung
- 40: elektrische Bremseinrichtung
- 50: mechanische Halteeinrichtung

- 100: Antrieb/Direktantrieb
- 101,101': Rotor
- 102, 102': Gehäuse/Stator
- 103: Lager
- 105: Bremse/Bremsmodul
- 106: Verschraubung
- 107: Pneumatikanschluss
- 108: Flexible Kupplung
- 109: Lager
- 110: Fangmagnet
- 111: Gebersystem
- 112: Kühlmantel
- 113: Kühlmodul/Lüftermodul
- 114: axiale Kühleinrichtung

- 200: Rolle/Walze
- 201: Welle
- 202: Gestell/Gerüst
- 203: Lager
- 204: Aufhängung
- 205: Schraubflansch
- 206: auswechselbarer Rollenkörper
- 207: Rollenuntergestell

- 300: Windenanordnung
- 301: Winde
- 302: Windengestell
- 303: Seil
- 304: Welle
- 305: Lager

## Patentansprüche

1. Vorrichtung zur Behandlung eines bandförmigen Metallmaterials in der Metallbearbeitung, wobei die Vorrichtung aufweist:
mindestens ein Rollenelement (200, 301), vorzugsweise Rolle (200), Walze (200) oder Winde (301), das zur Querschnittsänderung, zum Transport, Speichern, Zugaufbau und/oder Zugabbau des bandförmigen Metallmaterials vorgesehen ist, und
einen Antrieb (10, 100), der einen Elektromotor, vorzugsweise einen Torquemotor oder Synchronmotor, mit einem Stator (12, 102, 102') und einem Rotor (11, 101, 101') aufweist, wobei
die Vorrichtung ferner ein Gestell (202, 302) aufweist, der Rotor (11, 101, 101') mit dem Rollenelement (200, 301) verbunden ist, wodurch die Drehung des Rotors (11, 101, 101') auf das Rollenelement (200, 301) übertragen wird, und der Stator (12, 102, 102') direkt am Gestell (202, 302) montiert ist und/oder der Rotor (11, 101, 101') direkt mit dem Rollenelement (200, 301) oder einer Welle (201, 304) des Rollenelements (200, 301) verbunden ist,
**dadurch gekennzeichnet, dass**
der Antrieb (10, 100) mindestens einen Fangmagneten (110) aufweist, der eingerichtet ist, um magnetische Partikel aufzufangen und sie vom Elektromotor fernzuhalten.

2. Vorrichtung nach Anspruch 1, **dadurch gekennzeichnet, dass** der Elektromotor des Antriebs (10, 100) ein Innenläufer ist, der Rotor (11, 101) und das Rollenelement (200, 301) oder der Rotor (11, 101) und eine Welle (201, 304) des Rollenelements (200, 301) einstückig ausgebildet sind.

3. Vorrichtung nach Anspruch 1, **dadurch gekennzeichnet, dass** der Elektromotor des Antriebs (10, 100) ein Außenläufer ist und ein Mantelabschnitt des Rollenelements (200, 301) mit dem Rotor (101') verbunden ist, wobei der Mantelabschnitt des Rollenelements (200, 301) und der Rotor (101') vorzugsweise direkt miteinander verbunden oder einstückig ausgebildet sind.

4. Vorrichtung nach einem der vorigen Ansprüche, **dadurch gekennzeichnet, dass**
das Gestell (202, 302) das Rollenelement (200, 301) auf einer Seite lagert, während das Gestell (202, 302) keine zweite Lagerung für das Rollenelement (200, 301) aufweist, sondern das Rollenelement (200, 301) auf der gegenüberliegenden Seite über eine Rotorlagerung des Antriebs (10, 100) gelagert ist, oder
das Gestell (202, 302) das Rollenelement (200, 301) auf zwei Seiten lagert, wobei eine Lagerung des Rotors (11, 101, 101') im Antrieb (10, 100) entfällt.

5. Vorrichtung nach einem der vorigen Ansprüche, **dadurch gekennzeichnet, dass** zwei Antriebe (10, 100) auf gegenüberliegenden Seiten des Gestells (202, 302) mit dem Rollenelement (200, 301) verbunden sind.

6. Vorrichtung nach einem der vorigen Ansprüche, **dadurch gekennzeichnet, dass** der Rotor (11, 101, 101') des Antriebs (10, 100) ohne Zwischenschaltung eines Drehmomentgetriebes mit dem Rollenelement (200, 301) verbunden ist.

7. Vorrichtung nach einem der vorigen Ansprüche, **dadurch gekennzeichnet, dass** der Antrieb (10, 100) einen modularen Aufbau aufweist, wobei dieser durch Zusatzmodule erweiterbar ist, beispielsweise Bremsmodul (105) und/oder Haltemodul und/oder Getriebemodul und/oder Leistungssteigerungsmodul und/oder Kühlmodul (113).

8. Vorrichtung nach einem der vorigen Ansprüche, **dadurch gekennzeichnet, dass** der Antrieb (10, 100) eine Kupplung für den Rotor (11, 101, 101'), vorzugsweise eine Bogenzahnkupplung, aufweist.

9. Vorrichtung nach einem der vorigen Ansprüche, **dadurch gekennzeichnet, dass** die Vorrichtung umfasst:
ein Walzwerk, wobei das Rollenelement (200, 301) eine Stützwalze oder eine Arbeitswalze ist, oder
eine Metallbandbehandlungsanlage, wobei das Rollenelement (200, 301) eine Transportrolle, eine Spannrolle, eine Beschleunigungsrolle oder eine Rolle zum Zugaufbau oder Zugabbau des Metallmaterials ist, oder
einen Bandspeicher mit einer Windenanordnung (300), wobei das Rollenelement (200, 301) eine Seilwinde ist.

10. Vorrichtung nach einem der vorigen Ansprüche, **dadurch gekennzeichnet, dass** der Antrieb (10) aufweist:
eine elektrische Bremseinrichtung (40), die eingerichtet ist, um die Vorrichtung aus einem Arbeitszustand reibungsfrei in einen Haltezustand, in dem der Rotor (11) im Wesentlichen stillsteht, abzubremsen;
eine mechanische Halteeinrichtung (50), die eingerichtet ist, um die Vorrichtung bei Betätigung der mechanischen Halteeinrichtung (50) im Haltezustand mechanisch zu arretieren; und
eine Steuereinrichtung (31), die eingerichtet ist, um die elektrische Bremseinrichtung (40) und die mechanische Halteeinrichtung (50) so zu steuern, dass im Wesentlichen die gesamte Bewegungsenergie aus dem Arbeitszustand von der elektrischen Bremseinrichtung (40) umgewandelt wird, während die mechanische Halteeinrichtung (50) nur im Haltezustand der Vorrichtung betätig wird.

11. Vorrichtung nach Anspruch 10, **dadurch gekennzeichnet, dass**
der Antrieb (10) einen speisenden Umrichter (13) aufweist, der eingerichtet ist, um den Elektromotor des Antriebs (10) im Arbeitszustand mit Leistung zu versorgen und vorzugsweise eine Funktion zum Abbremsen der Vorrichtung in einem Normalbetriebszustand aufweist, wobei
die elektrische Bremseinrichtung (40) und/oder die Steuereinrichtung (31) so eingerichtet ist, dass sie in einem außerordentlichen Betriebszustand, der eine Störung des speisenden Umrichters (13) umfasst, den speisenden Umrichter (13) galvanisch vom Elektromotor trennt und die Vorrichtung in den Haltezustand abbremst, indem sie Wicklungen des Elektromotors über einen Bremswiderstand und/oder eine Widerstand/Kondensator-Schaltung und/oder direkt kurzschließt und/oder eine externe Gleichspannungsquelle aufschaltet.

12. Vorrichtung nach Anspruch 10 oder 11, **dadurch gekennzeichnet, dass** der Antrieb (10) ein Gehäuse aufweist, in dem die mechanische Halteeinrichtung (50) integriert oder an das die mechanische Halteeinrichtung (50) angeflanscht ist.

13. Vorrichtung nach einem der Ansprüche 10 bis 12, **dadurch gekennzeichnet, dass** die mechanische Halteeinrichtung (50) so eingerichtet ist, dass die Arretierung im Haltezustand formschlüssig und/oder kraftschlüssig erfolgt, wobei die Betätigung der mechanischen Halteeinrichtung (50) vorzugsweise elektrisch, mechanisch, hydraulisch oder pneumatisch erfolgt.

## Claims

1. Device for treating a strip-shaped metal material in metal processing, wherein the device comprises:
at least one roller element (200, 301), preferably roller (200), roll (200) or winder (301), which is provided for cross-sectional change, transport, storage, increase in tension and/or decrease in tension of the strip-shaped metal material, and
a drive (10, 100), which comprises an electric motor, preferably a torque motor or synchronous motor, with a stator (12, 102, 102') and a rotor (11, 101, 101'), wherein
the device further comprises a frame (202, 302), the rotor (11, 101, 101') is connected with the roller element (200, 301), whereby the rotation of the totor (11, 101, 101') is transmitted to the roller element (200, 301), and the stator (12, 102, 102') is directly mounted on the frame (202, 302) and/or the rotor (11, 101, 101') is directly connected with the roller element (200, 301) or a shaft (201, 304) of the roller element (200, 301),
**characterised in that**
the drive (10, 100) comprises at least one capturing magnet (110) arranged to capture magnetic particles and keep them away from the electric motor.

2. Device according to claim 1, **characterised in that** the electric motor of the drive (10, 100) is an internal rotor motor, the rotor (11, 101) and the roller element (200, 301) or the rotor (11, 101) and a shaft (201, 304) of the roller element (200, 301) being of integral construction.

3. Device according to claim 1, **characterised in that** the electric motor of the drive (10, 100) is an external rotor motor and a casing section of the roller element (200, 301) is connected with the rotor (101'), wherein the casing section of the roller element (200, 301) and the rotor (101') are preferably directly connected together or of integral construction.

4. Device according to any one of the preceding claims, **characterised in that** the frame (202, 302) mounts the roller element (200, 301) at one end, whilst the frame (202, 302) does not have a second mounting for the roller element (200, 301), but the roller element (200, 301) is mounted at the opposite end by way of a rotor mounting of the drive (10, 100),
or
the frame (202, 302) mounts the roller element (200, 301) at two ends, wherein mounting of the rotor (11, 101, 101') in the drive (10, 100) is eliminated.

5. Device according to any one of the preceding claims, **characterised in that** two drives (10, 100) are connected with the roller element (200, 301) at opposite sides of the frame (202, 302).

6. Device according to any one of the preceding claims, **characterised in that** the rotor (11, 101, 101') of the drive (10, 100) is connected with the roller element (200, 301) without interposition of a torque transmission.

7. Device according to any one of the preceding claims, **characterised in that** the drive (10, 100) has a modular construction, wherein this is extendable by supplementary modules, for example a brake module (105) and/or holding module and/or transmission module and/or power increasing module and/or cooling module (113).

8. Device according to any one of the preceding claims, **characterised in that** the drive (10, 100) comprises a clutch for the rotor (11, 101, 101'), preferably a curved tooth coupling.

9. Device according to any one of the preceding claims, **characterised in that** the device comprises:
a rolling mill, wherein the roller element (200, 301) is a backing roll or a work roll, or
a metal strip processing plant, wherein the roller element (200, 301) is a transport roller, a tensioning roller, an acceleration roller or a roller for increasing tension or decreasing tension of the metal material, or
a strip store with a winder arrangement (300), wherein the roller element (200, 301) is a cable winch.

10. Device according to any one of the preceding claims, **characterised in that** the drive (10) comprises:
an electrical braking device (40) arranged to brake the device in friction-free manner from a work state to a stopped state in which the rotor (11) is substantially stationary;
a mechanical holding device (50) arranged to mechanically lock the device in the stopped state when the mechanical holding device (50) is actuated; and
a control device (31) arranged to so control the electrical braking device (40) and the mechanical holding device (50) that substantially the entire movement energy is converted from the work state of the electrical braking device (40), whereas the mechanical holding device (50) is actuated only in the stopped state of the device.

11. Device according to claim 10, **characterised in that**
the drive (10) comprises a power supplying converter (13) arranged to supply the electric motor of the drive (10) with power in the work state and preferably has a function of braking the device in a normal operating state, wherein
the electrical braking device (40) and/or the control device (31) is or are so arranged that in an extraordinary operating state which embraces disruption of the power supplying converter (13) it or they electrically isolates or isolate the power supplying converter (13) from the electric motor and brakes or brake the device into the stopped state, **in that** it or they short-circuits or short-circuit windings of the electric motor by way of a braking resistance and/or a resistor/capacitor circuit and/or directly and/or switches or switch on an external direct voltage source.

12. Device according to claim 10 or 11, **characterised in that** the drive (10) comprises a housing in which the mechanical holding device (50) is integrated or on which the mechanical holding device (50) is flange-mounted.

13. Device according to any one of claims 10 to 12, **characterised in that** the mechanical holding device (50) is so arranged that the locking in the stopped state is carried out mechanically positive and/or by friction couple, wherein the actuation of the mechanical holding device (50) is preferably carried out electrically, mechanically, hydraulically or pneumatically.

## Revendications

1. Dispositif pour le traitement d'un matériau métallique en forme de bande destiné à être utilisé dans le traitement des métaux, ledit dispositif comprenant :
au moins un élément de roulement (200, 301), de préférence un rouleau (200), un cylindre (200) ou un treuil (301), qui est prévu pour la modification de la section transversale, le transport, le stockage, l'augmentation et/ou la diminution de la tension du matériau métallique en forme de bande, et
un entraînement (10, 100) qui comprend un moteur électrique, de préférence un moteur couple ou un moteur synchrone, comportant un stator (12, 102, 102') et un rotor (11, 101, 101'), dans lequel
le dispositif comprend en outre un châssis (202, 302), le rotor (11, 101, 101') est relié à l'élément de roulement (200, 301), la rotation du rotor (11, 101, 101') étant ainsi transmise à l'élément de roulement (200, 301), et le stator (12, 102, 102') est monté directement sur le châssis (202, 302) et/ou le rotor (11, 101, 101') est relié directement à l'élément de roulement (200, 301) ou à un arbre (201, 304) de l'élément de roulement (200, 301),
**caractérisé en ce que**
l'entraînement (10, 100) comprend au moins un aimant de capture (110) adapté pour capturer les particules magnétiques et les tenir à l'écart du moteur électrique.

2. Dispositif selon la revendication 1, **caractérisé en ce que** le moteur électrique de l'entraînement (10, 100) est un rotor intérieur, le rotor (11, 101) et l'élément de roulement (200, 301) ou le rotor (11, 101) et un arbre (201, 304) de l'élément de roulement (200, 301) sont réalisés en une seule pièce.

3. Dispositif selon la revendication 1, **caractérisé en ce que** le moteur électrique de l'entraînement (10, 100) est un rotor extérieur et une portion de l'enveloppe de l'élément de roulement (200, 301) est reliée au rotor (101'), la portion de l'enveloppe de l'élément de roulement (200, 301) et le rotor (101') étant de préférence reliés directement entre eux ou réalisés en une seule pièce.

4. Dispositif selon l'une quelconque des revendications précédentes, **caractérisé en ce que**
le châssis (202, 302) soutient l'élément de roulement (200, 301) sur un côté, alors que le châssis (202, 302) ne comporte pas de deuxième support pour l'élément de roulement (200, 301), sinon l'élément de roulement (200, 301) s'appuie sur le côté opposé sur un palier de rotor de l'entraînement (10, 100),
ou bien
le châssis (202, 302) soutient l'élément de roulement (200, 301) sur deux côtés, un support de rotor (11, 101, 101') dans l'entraînement (10, 100) étant supprimé.

5. Dispositif selon l'une quelconque des revendications précédentes, **caractérisé en ce que** deux entraînements (10, 100) sont reliés à l'élément de roulement (200, 301) sur des côtés opposés du châssis (202, 302).

6. Dispositif selon l'une quelconque des revendications précédentes, **caractérisé en ce que** le rotor (11, 101, 101') de l'entraînement (10, 100) est relié à l'élément de roulement (200, 301) sans interposition d'une transmission de couple.

7. Dispositif selon l'une quelconque des revendications précédentes, **caractérisé en ce que** l'entraînement (10, 100) a une structure modulaire qui peut être complétée par des modules supplémentaires, par exemple un module de freinage (105) et/ou un module de retenue et/ou un module de transmission et/ou un module d'augmentation de puissance et/ou un module de refroidissement (113).

8. Dispositif selon l'une quelconque des revendications précédentes, **caractérisé en ce que** l'entraînement (10, 100) comporte un embrayage pour le rotor (11, 101, 101'), de préférence un embrayage à denture courbe.

9. Dispositif selon l'une quelconque des revendications précédentes, **caractérisé en ce que** le dispositif comprend :
un laminoir, dans lequel l'élément de roulement (200, 301) est un rouleau d'appui ou un rouleau de travail, ou
une installation de traitement de bandes métalliques, dans lequel l'élément de roulement (200, 301) est un rouleau transporteur, un rouleau tendeur, un rouleau accélérateur ou un rouleau d'augmentation ou diminution de la tension du matériau métallique, ou
un accumulateur de bande avec un dispositif de treuil (300), dans lequel l'élément de roulement (200, 301) est un treuil.

10. Dispositif selon l'une quelconque des revendications précédentes, **caractérisé en ce que** l'entraînement (10) comprend :
un dispositif de freinage électrique (40) qui est conçu pour freiner le dispositif sans frottement d'un état de travail à un état d'attente dans lequel le rotor (11) est essentiellement immobile ;
un dispositif de retenue mécanique (50) qui est conçu pour bloquer mécaniquement le dispositif à l'état de retenue lorsque le dispositif de retenue mécanique (50) est actionné ; et
un dispositif de commande (31) qui est conçu pour commander le dispositif de freinage électrique (40) et le dispositif de retenue mécanique (50) de telle manière que pratiquement toute l'énergie cinétique de l'état de travail soit convertie par le dispositif de freinage électrique (40), tandis que le dispositif de retenue mécanique (50) n'est actionné que dans l'état de retenue du dispositif.

11. Dispositif selon la revendication 10, **caractérisé en ce que**
l'entraînement (10) comprend un convertisseur d'alimentation (13) qui est conçu pour alimenter en puissance le moteur électrique de l'entraînement (10) dans l'état de travail et qui comporte, de préférence, une fonction de freinage du dispositif dans un état de fonctionnement normal, dans lequel
le dispositif de freinage électrique (40) et/ou le dispositif de commande (31) est agencé de telle sorte que, dans un état de fonctionnement exceptionnel comprenant une défaillance du convertisseur d'alimentation (13), il isole galvaniquement le convertisseur d'alimentation (13) du moteur électrique et freine le dispositif dans l'état d'attente en court-circuitant les enroulements du moteur électrique par l'intermédiaire d'une résistance de freinage et/ou d'un circuit résistance/ condensateur et/ou court-circuite directement et/ou connecte une source de tension continue externe.

12. Dispositif selon l'une des revendications 10 ou 11, **caractérisé en ce que** l'entraînement (10) comprend un boîtier, dans lequel le dispositif de retenue mécanique (50) est intégré ou sur lequel le dispositif de retenue mécanique (50) est bridé.

13. Dispositif selon l'une des revendications 10 à 12, **caractérisé en ce que** le dispositif de retenue mécanique (50) est agencé de telle sorte que le blocage dans l'état d'attente s'effectue par complémentarité de forme et/ou par adhérence, le dispositif de retenue mécanique (50) étant de préférence actionné électriquement, mécaniquement, hydrauliquement ou pneumatiquement.
